# EUROPÄISCHE PATENTSCHRIFT

(11) **EP 1 296 051 B1**
(45) Veröffentlichungstag und Bekanntmachung des Hinweises auf die Patenterteilung: **26.05.2004**
(21) Anmeldenummer: 02019207.6
(22) Anmeldetag: 27.08.2002
(51) Int. Cl.: F02M 35/116, F02D 9/10

(54) **Luftansaugkanalsystem**
Air-intake conduit system
Système de conduit d'air d'admission

(30) Priorität: 22.09.2001 DE 10146750
(43) Veröffentlichungstag der Anmeldung: 26.03.2003
(73) Patentinhaber: Pierburg GmbH, 41460 Neuss (DE)
(72) Erfinder: Sovva, Elina, 47167 Duisburg (DE); Hüsges, Hans-Jürgen, 47877 Willich (DE)
(74) Vertreter: von Kirschbaum, Alexander, Dipl.-Ing.

(56) Entgegenhaltungen:
- EP-A- 0 905 365
- US-A- 2 640 472
- US-A- 2 807 448
- US-B1- 6 260 528
- PATENT ABSTRACTS OF JAPAN vol. 1995, no. 09, 31. Oktober 1995 (1995-10-31) & JP 07 166878 A (MAZDA MOTOR CORP), 27. Juni 1995 (1995-06-27)

## Beschreibung

Die Erfindung betrifft ein Luftansaugkanalsystem für Kraftfahrzeug-Brennkraftmaschinen. Insbesondere ist das Luftansaugkanalsystem für V-Motoren geeignet.

Es ist bekannt, in Luftansaugkanälen von Brennkraftmaschinen zur Beeinflussung des Strömungsverhaltens der angesaugten Luft Drossel-, Drall- und/oder Tumbelklappen vorzusehen. Durch derartige Klappen kann die Luftmenge sowie die Verwirbelung der Luftströmung gesteuert werden. Insbesondere bei V-Motoren ist der vorhandene Bauraum in dem Bereich des Luftansaugkanalsystems, in dem derartige Klappen angeordnet werden, sehr gering. Auf Grund des geringen vorhandenen Platzes werden die Klappen beispielsweise an einer Seitenwand des Kanals gelagert. Dies hat jedoch den Nachteil, dass bei einer beispielsweise teilweise geöffneten Drosselklappe der Kanal nur an einer Seite des Kanals einen Schlitz aufweist. Dies ist für das Strömungsverhalten nachteilig. Dem gegenüber sind mittig in dem Luftansaugkanal gelagerte Drosselklappen vorteilhaft, da hierdurch eine im Wesentlichen symmetrische Strömung erzeugt werden kann. Die mittige Lagerung der Drosselklappen ist jedoch häufig aus Platzgründen nicht möglich.

Ferner ist das Vorsehen von Schaltklappen in Luftansaugkanalsystemen bekannt. Schaltklappen dienen zur Variation der Länge von Ansaugkanälen. Ein aus DE 196 14 474 bekanntes Luftansaugkanalsystem weist für jeden Zylinder einen spiralförmig verlaufenden Luftansaugkanal auf. Hierbei erfolgt das Ansaugen der Luft über einen zentralen, innerhalb der spiralförmigen Ansaugkanäle angeordneten Sammel-Einlasskanal. Durch den für sämtliche Luftansaugkanäle gemeinsam vorgesehenen Sammel-Einlasskanal wird Luft angesaugt und über die einzelnen Luftansaugkanäle zur Brennkraftmaschine geleitet. Zum Verändern der Länge des Luftansaugkanals ist ein Kurzschlusskanal vorgesehen. Dieser mit einer Schaltklappe öffen- und verschließbare Kurzschlusskanal ist mit dem Sammel-Einlasskanal und jeweils einem Luftansaugkanal verbunden. Die einzelnen Schaltklappen sind über eine gemeinsame Welle miteinander verbunden. Die Lagerung der Welle erfolgt in dem Gehäuse des Luftansaugkanalsystems. Hierzu weist das Luftansaugkanalsystem zwei Gehäusehälften auf, wobei die Schaltwelle zwischen die Gehäusehälften eingelegt wird. Zur Verbindung der beiden Gehäusehälften bzw. der Gehäuseteile oder zur Befestigung des Luftansaugkanals am Zylinderkopf sind Befestigungsbohrungen erforderlich. Auf Grund der in einer Gehäusehälfte angeordneten gemeinsamen Welle müssen die Befestigungsbohrungen neben der Welle angeordnet werden. Dies kann zu Abdichtungsproblemen zwischen den beiden Gehäuseteilen führen.

Aufgabe der Erfindung ist es, ein Luftansaugkanalsystem für Kraftfahrzeug-Brennkraftmaschinen zu schaffen, bei welchem Klappen mit einer gemeinsamen Welle auch bei geringem Platz in einem Gehäuseteil bei Gewährleistung guter Dichtigkeit angeordnet werden können.

Die Lösung der Aufgabe erfolgt erfindungsgemäß durch die Merkmale des Anspruchs 1.

Das erfindungsgemäße Luftansaugkanalsystem weist ein Gehäuseteil auf, durch das zumindest ein Teil der Luftansaugkanäle gebildet ist. Das Gehäuseteil trägt mehrere Klappen, die jeweils in einem Luftansaugkanal angeordnet sind. Mindestens zwei der Klappen sind über eine gemeinsame Welle miteinander verbunden und somit synchron betätigbar. Ferner weist das Gehäuseteil Befestigungsbohrungen auf, die zur Befestigung des Gehäuseteils, z.B. an dem Zylinderkopf dienen.

Erfindungsgemäß ist die gemeinsame Welle zur Umgehung der mindestens einen Befestigungsbohrung gekröpft. Auf Grund der erfindungsgemäßen Kröpfung der Welle ist es möglich, Befestigungsbohrungen im Bereich, insbesondere zwischen zwei Klappen anzuordnen und dennoch die Klappen über eine gemeinsame Welle miteinander zu verbinden, so dass die Klappen gemeinsam angesteuert werden können. Insbesondere ist es somit möglich, Befestigungsbohrungen im Bereich von Dichtflächen so anzuordnen, dass eine gute Abdichtung gewährleistet ist.

Die Kröpfung der Welle ist vorzugsweise im Wesentlichen U-förmig. Vorzugsweise ist die gemeinsame Welle auf beiden Seiten der Kröpfung im Gehäuseteil gelagert. Die Lagerung erfolgt vorzugsweise durch Kunststoffschalen.

Da das erfindungsgemäße Luftansaugkanalsystem vorzugsweise für V-Motoren eingesetzt werden kann, sind in dem Gehäuseteil vorzugsweise zwei Wellen mit jeweils mindestens zwei Klappen vorgesehen. Die mit einer gemeinsamen Welle verbundenen Klappen sind hierbei vorzugsweise in den Luftansaugkanälen angeordnet, die z.B. zu einer der beiden Zylinderreihen des V-Motors führen.

Bei den Klappen kann es sich um innerhalb eines Luftansaugkanals angeordnete Drosselklappen handeln. Beispielsweise kann es sich auch um nahe der Zylinder an den Luftansaugkanälen angeordnete Tumbleklappen handeln.

Ferner kann es sich bei den Klappen um Schaltklappen handeln, die zum Öffnen bzw. Schließen eines Kurzschlußkanals bei Luftansaugkanälen vorgesehen sind, die insbesondere einen gemeinsamen Sammeleinlasskanal aufweisen, der innerhalb der spiralförmigen zu den Zylindern führenden Ansaugkanälen angeordnet ist. Hierbei wird bei geschlossenen Schaltklappen Luft durch den gemeinsamen Sammel-Einlasskanal in die spiralförmigen Luftansaugkanäle geführt und von diesen zur Brennkraftmaschine geleitet. Durch Öffnen der Schaltklappen wird zumindest ein Teil der Luft durch einen Kurzschlusskanal geleitet, so dass die Länge des Luftansaugkanals veränderbar ist.

Nachfolgend wird die Erfindung anhand einer bevorzugten Ausführungsform unter Bezugnahme auf die anliegenden Zeichnungen näher erläutert.

Es zeigen:
- Fig. 1: eine schematische, teilweise geschnittene Seitenansicht eines Luftansaugkanalsystems und
- Fig. 2: eine schematische Draufsicht einer Gehäusehälfte des Luftansaugkanalsystems.

Ein Luftansaugkanalsystem weist eine untere Gehäusehälfte 10 sowie eine obere Gehäusehälfte 12 auf. Über einen zentralen Lufteinsaugkanal 14 wird Luft in das Luftansaugkanalsystem eingesaugt und über einzelne im Wesentlichen spiralförmige Luftansaugkanäle 16, 18 den einzelnen Zylindern der Brennkraftmaschine zugeführt. Das dargestellte Luftansaugkanalsystem ist für einen V-Motor geeignet, wobei die bei einem 6-Zylinder V-Motor drei hintereinander angeordneten Luftansaugkanäle 16 mit der einen Zylinderreihe des V-Motors und die drei gegenüberliegenden Luftansaugkanäle 18 mit der anderen Zylinderreihe des V-Motors verbunden sind.

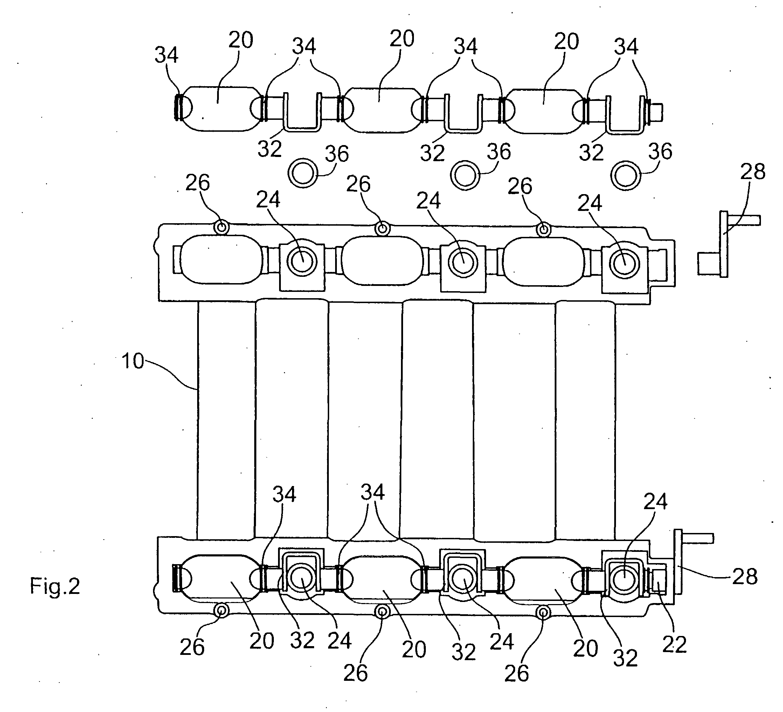

Die untere Gehäusehälfte 10 dient zur Aufnahme von Tumbelklappen 20 (Fig. 2). Hierbei ist je Luftansaugkanal des Luftansaugkanalsystems, d.h. bezüglich der drei Luftansaugkanäle 16 bzw. der drei Luftansaugkanäle 18 jeweils eine gemeinsame Welle 22 vorgesehen, die mit den im dargestellten Ausführungsbeispiel drei Tumbelklappen 20 verbunden ist.

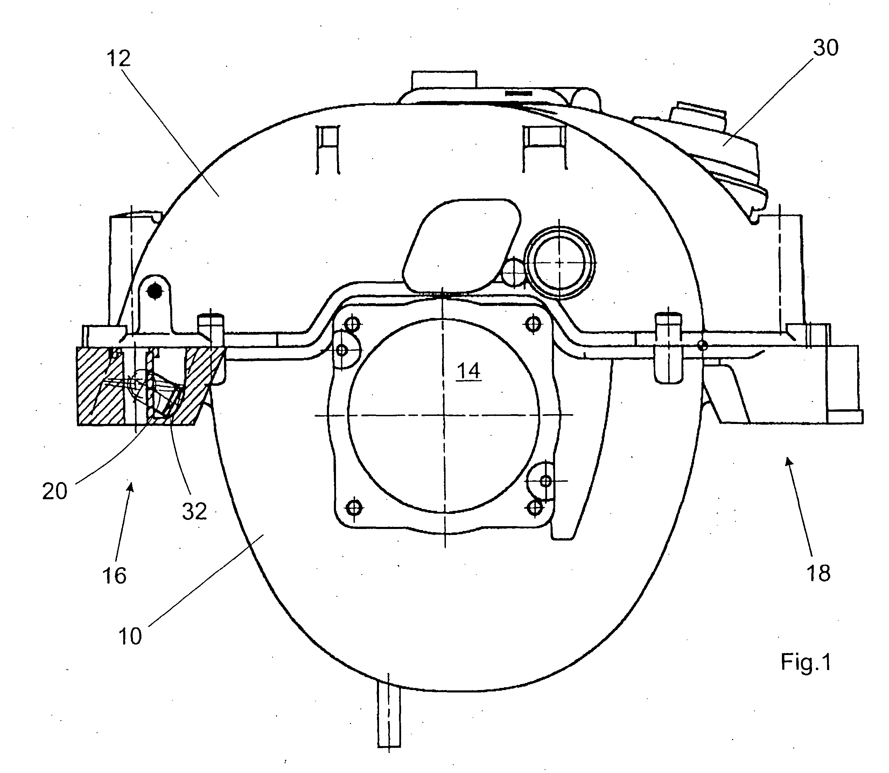

Ferner weist die untere Gehäusehälfte Befestigungsbohrungen 24 auf, die zur Verbindung von Saugrohr und Zylinderkopf dient. Weitere Befestigungsbohrungen 26 dienen zum Verbinden der beiden Gehäusehälften 10,12. Die Befestigungsbohrungen 24 sind im allgemeinen zwischen zwei benachbarten Tumbelklappen 20, die mit der gemeinsamen Welle 22 verbunden sind, angeordnet. Im Randbereich der Welle 22 ist die Befestigungsbohrung 24 zwischen einer Tumbelklappe 20 und einem Betätigungshebel 28, der mit der Welle 22 verbunden ist, angeordnet. Der Betätigungshebel dienst zum Betätigen der Tumbelklappe 20 und ist hierzu mit einem Betätigungsorgan 30 (Fig. 1) verbunden.

Zur Umgehung der Befestigungsbohrungen 24 weisen die Wellen 22 mehrere Kröpfungen 32 auf. Die Kröpfungen 32 sind hierbei derart ausgelegt, dass ein ausreichendes Verstellen der Tumbelklappen 20 möglich ist, wobei der Verstellwinkel der Klappen 20 gegebenenfalls durch die Befestigungsbohrungen 24 beschränkt ist.

Zur Montage werden zuerst Lagerschalen 34, die vorzugsweise aus Kunststoff sind, mit den beiden Wellen 22 verbunden. Hierbei ist vorzugsweise auf jeder Seite der Tumbelklappen 20 und im Bereich des Betätigungshebels 28 ein Lager vorgesehen. Anschließend werden die Wellen 22 zusammen mit den Klappen 20 in das untere Gehäuseteil 10 eingesetzt. Hierbei sind die Wellen 22 und Klappen 20 vorzugsweise einstückig ausgebildet. Insbesondere handelt es sich um ein Kuststoff-Spritzgussteil. Hierauf werden die Betätigungshebel 28 montiert. Anschließend können die beiden Gehäuseteile 10, 12 über geeignete Befestigungselemente mittels der Befestigungsbohrungen 26 miteinander verbunden werden. Zusätzlich sind Dichtringe 36 und eine die Fläche 38 abdichtende Dichtung eingefügt. Hierauf erfolgt die Befestigung des Luftansaugkanalsystems über die Befestigungsbohrungen 24 an dem Zylinderkopf.

## Patentansprüche

1. Luftansaugkanalsystem für Kraftfahrzeug-Brennkraft-maschinen, insbesondere V-Motoren, mit
- einem zumindest einen Teil der Luftkanäle (16, 18) bildenden Gehäuseteil (10),
- von dem Gehäuseteil (10) getragenen, jeweils in einem Luftkanal (16, 18) angeordneten Klappen (20), wobei mindestens zwei Klappen (20) eine gemeinsame Welle (22) aufweisen und
- in dem Gehäuseteil (10) angeordneten Befestigungsbohrungen (24) zur Befestigung des Gehäuseteils (10), wobei die gemeinsame Welle (22) zur Umgehung mindestens einer Befestigungsbohrung (24) gekröpft ist.

2. Luftansaugkanalsystem nach Anspruch 1, **dadurch gekennzeichnet, dass** die Kröpfung (32) der Welle (22) im Wesentlichen U-förmig ist.

3. Luftansaugkanalsystem nach einem der Ansprüche 1 oder 2, **dadurch gekennzeichnet, dass** die gemeinsame Welle (22) mehrfach gekröpft ist.

4. Luftansaugkanalsystem nach einem der Ansprüche 1 bis 3, **dadurch gekennzeichnet, dass** die gemeinsame Welle (22) auf beiden Seiten der Kröpfung (32) im Gehäuseteil (10) insbesondere in Kunststoffschalen (34) gelagert ist.

5. Luftansaugkanalsystem nach einem der Ansprüche 1 bis 4, **dadurch gekennzeichnet, dass** in dem Gehäuseteil (10) zwei Wellen (22) mit jeweils mindestens zwei Klappen (20) angeordnet sind.

6. Luftansaugkanalsystem nach einem der Ansprüche 1 bis 5, **dadurch gekennzeichnet, dass** die Klappen (20) jeweils innerhalb eines Luftansaugkanals (16, 18) angeordnete Tumbel- oder Drosselklappen sind.

7. Luftansaugkanalsystem nach einem der Ansprüche 1 bis 5, **dadurch gekennzeichnet, dass** die Klappen (20) Tumbelklappen zum Erzeugen von Verwirbelungen in einem Brennraum sind.

## Claims

1. Air-intake conduit system for automotive internal combustion engines, in particular V-engines, comprising
a housing member (10) forming at least a part of the air conduits (16, 18),
flaps (20) supported by said housing member (10) and arranged in an air conduit (16, 18), respectively, at least two flaps (20) having a common shaft (22), and
mounting bores (24) provided in the housing member (10) for mounting the housing member (10), the common shaft (22) being cranked to bypass at least one mounting bore (24).

2. Air-intake conduit system of claim 1, wherein the crank portion (32) of the shaft (22) is substantially U-shaped.

3. Air-intake conduit system of one of claims 1 or 2, wherein the common shaft (22) has a plurality of crank portions.

4. Air-intake conduit system of claims 1 to 3, wherein the common shaft (22) is supported in the housing (10) on both sides of the crank portion (32), in particular in plastic material bushes (34).

5. Air-intake conduit system of claims 1 to 4, wherein two shafts (22) each having at least two flaps (20) are arranged in the housing member (10).

6. Air-intake conduit system of claims 1 to 5, wherein the flaps (20) are tumble or throttle flaps arranged inside an air-intake conduit (16, 18), respectively.

7. Air-intake conduit system of claims 1 to 5, wherein the flaps (20) are tumble flaps for causing turbulences in a combustion chamber.

## Revendications

1. Système de conduits d'air d'admission pour des moteurs à combustion interne de véhicules automobiles, en particulier des moteurs en V, comprenant
- une partie de carter (10) formant au moins une partie des conduits d'air (16, 18),
- des clapets (20) supportés dans la partie de carter (10), respectivement disposés dans un conduit d'air (16, 18), au moins deux clapets présentant un arbre commun (22) et
- des trous de fixation (24) disposés dans la partie de carter (10) pour la fixation de la partie de carter (10), l'arbre commun (22) étant coudé pour contourner au moins un trou de fixation (24).

2. Système de conduits d'air d'admission suivant la revendication 1, **caractérisé en ce que** le coude (32) de l'arbre (22) est essentiellement en forme de U.

3. Système de conduits d'air d'admission suivant l'une des revendications 1 et 2, **caractérisé en ce que** l'arbre commun (22) est coudé plusieurs fois.

4. Système de conduits d'air d'admission suivant l'une des revendications 1 à 3, **caractérisé en ce que** l'arbre commun (22) est monté sur les deux côtés du coude (32) dans la partie de carter (10), en particulier dans des coquilles en matière plastique (34).

5. Système de conduits d'air d'admission suivant l'une des revendications 1 à 4, **caractérisé en ce que** deux arbres (22) avec au moins deux clapets respectifs (20) sont disposés dans la partie de carter (10).

6. Système de conduits d'air d'admission suivant l'une des revendications 1 à 5, **caractérisé en ce que** les clapets (20) sont des papillons ou des clapets oscillants respectivement disposés à l'intérieur d'un conduit d'air d'admission (16, 18).

7. Système de conduits d'air d'admission suivant l'une des revendications 1 à 5, **caractérisé en ce que** les clapets (20) sont des clapets oscillants pour produire des tourbillonnements dans une chambre de combustion.
